# EUROPÄISCHE PATENTSCHRIFT

(11) **EP 2 759 437 B1**
(45) Veröffentlichungstag und Bekanntmachung des Hinweises auf die Patenterteilung: **15.03.2017**
(21) Anmeldenummer: 14151719.3
(22) Anmeldetag: 20.01.2014
(51) Int. Cl.: B60K 15/04, F16L 37/14, F16L 37/098, F16L 37/088, B60K 15/03

(54) **Vorrichtung zum Befüllen zumindest eines in einem Kraftfahrzeug angeordneten Kraftstofftanks**
Device for filling at least one fuel tank installed in a motor vehicle
Dispositif de remplissage d'au moins un réservoir de carburant disposé dans un véhicule automobile

(30) Priorität: 29.01.2013 DE 102013100873
(43) Veröffentlichungstag der Anmeldung: 30.07.2014
(73) Patentinhaber: CLAAS Selbstfahrende Erntemaschinen GmbH, 33428 Harsewinkel (DE)
(72) Erfinder: Nagelsmöller, Bernd, 33829 Borgholzhausen (DE); Auf der Landwehr, Christian, 48231 Warendorf (DE); Wachsner, Andreas, 33818 Leopoldshöhe (DE)

(56) Entgegenhaltungen:
- DE-A1- 19 533 920
- DE-A1- 19 742 041
- FR-A1- 2 902 374
- US-A1- 2008 277 929
- US-B1- 6 659 122

## Beschreibung

Die Erfindung betrifft gemäß dem Oberbegriff des Patentanspruchs 1 eine Vorrichtung zum Befüllen zumindest eines in einem Kraftfahrzeug angeordneten Kraftstoffstanks mit einem beabstandet zu dem zumindest einen Kraftstofftank angeordneten Befüllstutzen, einem am jeweiligen Kraftstofftank vorgesehenen Tankstutzen sowie einem den jeweiligen Befüllstutzen und den jeweiligen Tankstutzen miteinander verbindenden flexibel ausgebildeten Wellrohr.

Kraftstofftanks von Kraftfahrzeugen sind im Allgemeinen durch Verkleidungs- oder Karosserieteile des Kraftfahrzeugs abgedeckt, so dass ein innerhalb des Verkleidungs- oder Karosserieteils liegender Befüllstutzen vorgesehen ist, der über ein Zulaufrohr mit einem Tankstutzen des Kraftstofftanks in Verbindung steht. Ein entsprechendes Zulaufrohr wird auch dann vorgesehen, wenn sich der Tankstutzen an einer schlecht zugänglichen Stelle befindet. Das kann beispielsweise bei selbstfahrenden land- oder bauwirtschaftlich genutzten Arbeitsmaschinen, bei denen der Kraftstofftank unter optimaler Raumausnutzung zwischen den Aggregaten angeordnet ist, der Fall sein. Anders als bei Personen- oder Lastkraftfahrzeugen, bei denen der Kraftstofftank in einem aufprallsicheren Bereich nahe der Hinterachse angeordnet ist, kann dessen Lage bei den land- und bauwirtschaftlich genutzten Arbeitsmaschinen innerhalb einer Typenbaureihe variieren. Während einer Betankung des Kraftstofftanks wird eine Zapfpistole in den Befüllstutzen eingeführt, so dass anschließend der Kraftstoff über das Zulaufrohr und den Tankstutzen in den Kraftstofftank geleitet wird. Eine entsprechende Betankung ist sowohl für Personenkraftfahrzeuge sowie Lastkraftfahrzeuge als auch für landwirtschaftliche Arbeitsmaschinen bekannt. Letztere Kraftfahrzeuge können beispielsweise auch als Traktoren oder selbstfahrende Erntemaschinen, das heißt als Feldhäcksler oder Mähdrescher ausgebildet sein.

Eine Vorrichtung zum Befüllen zumindest eines in einem Kraftfahrzeug angeordneten Kraftstofftanks ist aus der DE 19 71 899 U1 bekannt. Das zwischen dem Befüllstutzen und dem Tankstutzen verlaufende Zulaufrohr ist dabei als Wellrohr aus im Wesentlichen diffusionsfestem Kunststoff, insbesondere Polyamid, hergestellt. Dabei sollen die beiden Enden des Wellrohres mit einer aus einem elastischen Material hergestellten Dichtung versehen sein, die gemäß einem Ausführungsbeispiel das jeweilige Ende des Wellrohres sowohl an dessen Innenmantelfläche als auch dessen Außenmantelfläche übergreift und die nach einem weiteren Ausführungsbeispiel nur an der Innenmantelfläche anliegt. Die Dichtung weist dabei ein an die Wellungen des Wellrohres angepasstes Rippenprofil auf. Sowohl der Befüllstutzen als auch der Tankstutzen sind an ihrem dem Wellrohr zugewandten Endabschnitt rohrförmig ausgebildet, so dass das Wellrohr mit samt der Dichtung auf diesen zylindrischen Endabschnitt aufgeschoben werden kann. Dabei besteht weiterhin die Möglichkeit, diese abgedichtete Verbindung des Wellrohres mit dem jeweiligen Stutzen dadurch zu sichern, dass das Wellrohr in diesem Bereich durch einen zusätzlichen Spannring, also mittels einer Schelle, auf dem Stutzen verspannt wird.

Aus gattungsbildenden der DE 195 33 920 A1 ist eine Vorrichtung zum Verbinden eines Verbindungsschlauches mit einem Kraftstoffbehälter und einem Einfüllstutzen eines Kraftfahrzeuges bekannt.

Es ist Aufgabe der vorliegenden Erfindung, die Enden eines flexibel ausgebildeten Wellrohres derart mit dem Befüllstutzen und dem Tankstutzen zu verbinden, dass sich diese Verbindung trotz der am Kraftfahrzeug auftretenden Schwingungen nicht lösen kann und dauerhaft keine Leckagen auftreten können. Diese Dichtigkeit der Verbindung des Wellrohres mit dem jeweiligen Stutzen soll auch dann gewährleistet sein, wenn bei Reparaturarbeiten das Wellrohr von dem entsprechenden Stutzen getrennt und anschließend wieder mit diesem verbunden wird.

Diese Aufgabe wird, ausgehend vom Oberbegriff des Patentanspruchs 1, in Verbindung mit dessen kennzeichnenden Merkmalen gelöst. Dabei soll das Wellrohr an zumindest einem seiner Enden über eine Kuppeleinheit mit dem Befüllstutzen und/oder Tankstutzen verbunden sein, wobei die Kuppeleinheit aus einem dem Wellrohr zugeordneten ersten Kuppelelement sowie einem zweiten, dem Befüllstutzen und/oder dem Tankstutzen zugeordneten zweiten Kuppelelement besteht, und wobei die ersten und zweiten Kuppelelemente miteinander über eine Steckverbindung kuppelbar und jeweils über zumindest ein formschlüssiges Verriegelungselement in dieser Stellung zueinander arretierbar sind. Das zweite Kuppelelement ist dabei über einen Gewindeabschnitt in den Tankstutzen beziehungsweise den Befüllstutzen eingeschraubt, wobei zwischen dem Stutzen und dem zweiten Kuppelelement, diesem Einschraubgewinde benachbart, eine Dichtung vorgesehen ist. Da die Kuppeleinheit aus den dem jeweiligen Stutzen und dem Wellrohr zugeordneten zweiten und ersten Kuppelelementen besteht, die über eine Steckverbindung und formschlüssige Verriegelungselemente aneinander fixiert werden, kann eine dauerhafte Verbindung zwischen diesen Bauelementen hergestellt werden. Darüber hinaus können im Bereich der Verbindung der beiden Kuppelelemente Dichtungen vorgesehen werden, mit denen dauerhaft Leckagen verhindert werden. Für Reparaturarbeiten lässt sich die Verbindung zwischen dem Wellrohr und dem jeweiligen Stutzen problemlos trennen, indem das erste Kuppelelement von dem zweiten Kuppelelement gelöst wird. Die Verbindung der beiden Kuppelelemente miteinander mittels der verriegelten Steckverbindung sowie einerseits mit den Stutzen und andererseits mit dem Wellrohr ist außerdem unempfindlich, soweit an den entsprechenden Bauteilen Schwingungen auftreten. Diese Schwingungen können in erheblichem Maße an landwirtschaftlichen Arbeitsmaschinen wie selbstfahrenden Erntemaschinen auftreten, bei denen die Brennkraftmaschine ein Dreschwerk, eine Körneraufbereitung, ein Häckselwerk usw. antreibt. Daher soll das erfindungsgemäße Befüllsystem insbesondere bei derartigen Kraftfahrzeugen vorgesehen sein. Das Wellrohr kann aus im Wesentlichen diffusionsfestem, mehrschichtigem Kunststoff hergestellt sein, das in seinen Endbereichen einen glatten, kreiszylindrischen Abschnitt aufweist, in welchen das erste Kuppelelement einschiebbar ist.

Demgegenüber sind nach der Druckschrift DE 19 71 899 U1 zwischen den beiden Enden des Wellrohrs und den beiden Stutzen keine Kuppeleinheiten vorgesehen, die aus ersten und zweiten Kuppelelementen bestehen. Vielmehr ist bei dieser Lösung der jeweilige Stutzen in seinem dem Wellrohr zugewandten Endbereich zylindrisch ausgebildet, wobei das jeweilige Ende des Wellrohres unter Einfügung einer elastischen Dichtung auf diesen zylindrischen Endabschnitt aufgeschoben wird. Mit einer derartigen Dichtungsanordnung kann aber keine dauerhafte Abdichtung des Wellrohres gegenüber den beiden Stutzen erzielt werden.

In weiterer Ausgestaltung der Erfindung soll das erste Kuppelelement einen ersten Hülsenabschnitt aufweisen, der zur Fixierung innerhalb des Wellrohres mit einer

Außenmantelfläche wird dabei, im Längsschnitt des ersten Hülsenabschnitts gesehen, vorzugsweise zahnartig ausgebildet. Aufgrund dieser zahnartigen Ausbildung wird eine dauerhafte Verbindung zwischen dem Außenmantel dieses ersten Hülsenabschnittes und der Innenmantelfläche des Wellrohres hergestellt. Zudem kann eine ringförmige Nut an dem äußeren Ende der Außenmantelfläche des ersten Kuppelelementes vorgesehen sein, welche der Aufnahme eines Dichtringes dient.

Weiterhin ist vorgesehen, dass das zweite Kuppelelement über ein Außengewinde in einem Innengewinde des Tankstutzens oder des Befüllstutzens fixierbar ist, wobei sich an das Innengewinde an seinem vom Inneren des Kraftstofftanks oder Befüllstutzens abgewandten Seite eine im Tank- oder Befüllstutzen ausgebildete zylindrische Dicht- und Führungsfläche anschließt. In diesem Fall kann das zweite Kuppelelement einen sich an das Außengewinde anschließenden, radial über das Außengewinde vorstehenden Bund aufweisen. Dieser Bund des zweiten Kuppelelements und die zylindrische Dicht- und Führungsfläche des jeweiligen Stutzens sind konzentrisch zueinander geführt und können in bestimmten Bereichen Dichtungen aufnehmen. Im Übrigen dienen die Flächen des Bundes und des Tank- oder Befüllstutzens dazu, das zweite Kuppelelement innerhalb des Tank- oder Befüllstutzens zu führen.

In diesem Zusammenhang wird außerdem vorgeschlagen, im Bund des zweiten Kuppelelements eine Außennut vorzusehen, in der ein Radialdichtring angeordnet ist, welcher an einer Innenmantelfläche der Dicht- und Führungsfläche anliegt. Dieser Radialdichtring ist zweckmäßigerweise als O-Ring ausgebildet, der radial gegenüber seinen Dichtflächen elastisch vorgespannt ist.

Außerdem kann eine innere Mantelfläche des zweiten Kuppelelements, in Richtung des Inneren des Kraftstofftanks oder des Befüllstutzens gesehen, mit einem konischen Einführabschnitt, einem daran anschließenden zylindrischen Führungsabschnitt und einem sich erweiternden Leitabschnitt versehen sein. Der konische Einführabschnitt ist als Anfasung am Rand der Innenbohrung des zweiten Kuppelelements ausgebildet und sorgt dafür, dass ein zylindrischer Abschnitt des ersten Kuppelelements problemlos in das zweite Kuppelelement eingeführt werden kann. Dabei kann der Führungsabschnitt eine radiale Innennut aufweisen, in der ebenfalls ein Radialdichtring angeordnet ist, der vorzugsweise als O-Ring ausgebildet ist.

Insbesondere kann das zweite Kuppelelement durch Schweißen oder Kleben mit dem Tank- oder Befüllstutzen verbindbar sein.

Weiterhin soll von dem zweiten Kuppelelement an seiner vom Inneren des Kraftstofftanks oder des Befüllstutzens abgewandten Stirnseite eine Sperrhülse ausgehen, die mit Sperrschlitzen versehen ist, wobei Schenkel eines Verriegelungsbügels tangential in das Innere der Sperrhülse ragen und in eine an einer Außenmantelfläche des ersten Kuppelelements vorgesehene Sperrnut eingreifen. Folglich kann in vorteilhafter Weise das erste Kuppelelement in das zweite Kuppelelement eingeführt werden, woraufhin der Verriegelungsbügel in die Sperrschlitze eingeschoben wird und dabei in die entsprechende am zweiten Kuppelelement vorgesehene Sperrnut eingreift. Dadurch sind die beiden Kuppelelemente in axialer Richtung zueinander fixiert, während der zuvor erläuterte Radialdichtring, der in der Innennut angeordnet ist und elastisch vorgespannt am zylindrischen Abschnitt des ersten Kuppelelements anliegt, für eine dauerhafte Abdichtung sorgt.

In weiterer Ausgestaltung der Erfindung ist vorgesehen, dass zwischen dem ersten und dem zweiten Kuppelelement ein axialer Anschlag vorgesehen ist, der zu deren Zentrierung dient und zum einen durch den konischen Einführabschnitt und zum anderen durch einen am ersten Kuppelelement ausgebildeten ebenfalls konischen Außenabschnitt gebildet wird. Über diese beiden konischen Abschnitte, die im gekuppelten Zustand des Kuppelelements aneinander liegen zentrieren sich die beiden Kuppelelemente zueinander.

Dabei kann der Verriegelungsbügel durch einen konischen Außenabschnitt des ersten Kuppelelementes bei dessen Einführung in das zweite Kuppelelement vorübergehend aufweitbar sein. Das zweite Kuppelelement kann hierzu derart vorkonfektioniert sein, dass sich der Verriegelungsbügel bereits in den dafür vorgesehenen Sperrschlitzen befindet, so dass bei einem Einführen des ersten Kuppelelementes in das zweite Kuppelelement der Verriegelungsbügel durch den konische Außenabschnitt aufgeweitet wird. Mit dem Erreichen der Endposition des ersten Kuppelelementes gegenüber dem zweiten Kuppelelementes springt der Verriegelungsbügel in die Sperrnut des ersten Kuppelelementes zurück.

Schließlich können vom Befüllstutzen ein oder mehrere Wellrohre ausgehen, von denen eines an einen Tankstutzen zumindest eines als Haupttank dienenden Kraftstofftanks und/oder zumindest eines an einen Tankstutzen eines als Zusatztank dienenden Kraftstofftanks angeschlossen sind. Ein derartiges Tanksystem soll insbesondere für eine landwirtschaftliche Arbeitsmaschine vorgesehen sein, die als Traktor, selbstfahrender Mähdrescher oder selbstfahrender Feldhäcksler ausgebildet ist. Die Querschnitte in den Stutzen können dabei derart dimensioniert sein, dass entsprechend dem Füllvolumen des jeweiligen Kraftstofftanks deren Befüllung parallel erfolgen kann. Das bedeutet beispielsweise, dass der mit einem geringeren Füllvolumen ausgebildete Zusatztank im Tankstutzen einen geringeren Durchlassquerschnitt als der Tankstutzen des Haupttanks aufweist. Ziel ist es, innerhalb einer möglichst kurzen Zeit beide Kraftstofftanks mit Kraftstoff zu befüllen, damit die Stillstandzeiten der entsprechenden selbstfahrenden Erntemaschine reduziert werden.

Diese Aufteilung eines Kraftstofftanks in zumindest einen Haupttank und zumindest einen Zusatztank bietet die Möglichkeit einer besseren Raumausnutzung innerhalb einer derartigen Arbeitsmaschine, wobei dann in vorteilhafter Weise die entsprechenden Kraftstofftanks zueinander beabstandet angeordnet sein können. Für die Zulaufrohre kann dabei in vorteilhafter Weise das entsprechend angepasste Wellrohr verwendet werden, an dessen beiden Enden die erfindungsgemäßen Kuppeleinheiten vorgesehen werden. Somit wird erfindungsgemäß ein flexibles Leitungssystem geschaffen, das an die entsprechenden Erfordernisse angepasst werden kann.

Vorteilhafte Ausgestaltungen der Erfindung, die nachfolgend erläutert werden, sind in den Zeichnungen dargestellt. Es zeigen:
- Figur 1: eine schematische Darstellung eines erfindungsgemäßen Befüllsystems mit einem Befüllstutzen, von dem aus zwei flexibel ausgebildete Wellrohre zu einem Haupttank und einem Zusatztank führen und
- Figur 2: einen Längsschnitt durch einen Endbereich eines Wellrohres, das über eine erfindungsgemäße Kuppeleinheit mit einem Tankstutzen verbunden ist.

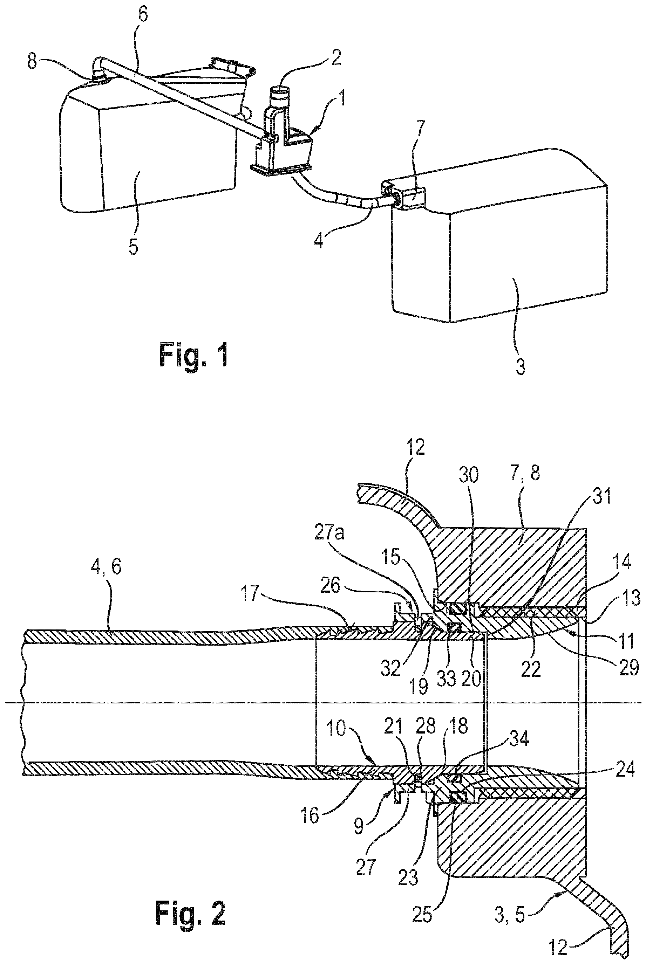

In der Figur 1 ist mit 1 ein Befüllstutzen bezeichnet, der mittels eines für einen Tankvorgang abnehmbaren Verschlussdeckels 2 verschlossen ist. Von diesem Befüllstutzen 1 gehen ein erstes zu einem als Haupttank ausgebildeten Kraftstofftank 3 führendes Wellrohr 4 und ein zweites zu einem als Zusatztank ausgebildeten Kraftstofftank 5 führendes Wellrohr 6 ab. Dabei steht das erste Wellrohr 4 mit einem Tankstutzen 7 des als Haupttank ausgebildeten Kraftstofftanks 3 in Verbindung, während das zweite Wellrohr 6 mit einem Tankstutzen 8 des als Zusatztank ausgebildeten Kraftstofftanks 5 verbunden ist.

Zur näheren Erläuterung der Verbindung der beiden Wellrohre 4 und 6 mit dem Befüllstutzen 1 und mit den beiden Tankstutzen 7 und 8 wird auf die Figur 2 verwiesen, in der als Beispiel eine Verbindung der beiden Wellrohre 4 und 6 mit den Tankstutzen 7 und 8 dargestellt ist. In entsprechender Weise können natürlich auch die beiden Wellrohre 6 und 7 mit dem Befüllstutzen 1 verbunden sein.

Zur Verbindung des Tankstutzens 7, 8 mit dem Wellrohr 4, 6 dient dabei eine Kuppeleinheit 9, die aus einem ersten Kuppelelement 10 und einem zweiten Kuppelelement 11 besteht. Von dem Tankstutzen 7, 8 geht eine Wandung 12 des Kraftstofftanks 3, 5 aus, von der nur ein Teilabschnitt dargestellt ist. Das Gleiche gilt für das Wellrohr 4, 6, von dem ebenfalls nur ein Teilbereich dargestellt ist. Sowohl der Tankstutzen 7, 8 als auch die Wandung des entsprechenden Kraftstofftanks 3, 5 sind vorzugsweise aus Kunststoff hergestellt.

Wie weiterhin aus der Figur 2 hervorgeht, weist der Tankstutzen 7, 8 eine Bohrung 13 mit einem Innengewinde 14 auf. An dieses Innengewinde 14 schließt sich an seinem vom Inneren des Kraftstofftanks 3, 5 abgewandten Ende eine zylindrische Dicht- und Führungsfläche 15 an. Das erste Kuppelelement 10 steht über einen ersten Hülsenabschnitt 16 mit dem Wellrohr 4, 6 in Verbindung, wobei der erste Hülsenabschnitt 16 insgesamt konisch ausgebildet ist und eine profilierte Außenmantelfläche 17 aufweist, die im Inneren des Wellrohres 4, 6 fixiert ist. Wie aus der Figur 2 hervorgeht, ist diese profilierte Außenmantelfläche 17 sägezahnartig ausgebildet, so dass sich der Hülsenabschnitt 16 in das Wellrohr 4, 6 einführen lässt, jedoch aus diesem nicht herauswandern kann. Alternativ kann diese profilierte Außenmantelfläche 17 auch eine schraubenlinienartige Kontur aufweisen, so dass das erste Kuppelelement 10 in das Wellrohr 4, 6 einschraubbar ist. Jedoch ist hierbei der erforderliche Aufwand zur Abdichtung der Außenmantelfläche 17 gegenüber dem Wellrohr 4, 6 erheblich größer.

An diesen ersten Hülsenabschnitt 16 schließt sich ein zweiter Hülsenabschnitt 18 an, der einen konischen Außenabschnitt 19 und einen zylindrischen Endabschnitt 20 aufweist. Ferner ist das erste Kuppelelement 10 in einem Bereich zwischen dem konischen Außenabschnitt 19 und dem ersten Hülsenabschnitt 16 mit einer in Umfangsrichtung verlaufenden Sperrnut 21 versehen.

Das zweite Kuppelelement 11 ist mittels eines Außengewindes 22 in dem zuvor erläuterten Innengewinde 14 des Tankstutzens 7, 8 befestigt. An dieses Außengewinde 22 schließt sich ein radial vorstehender Bund 23 an, über den das zweite Kuppelelement 11 gegenüber der Dicht- und Führungsfläche 15 geführt ist, wobei in einer Außennut 24 des Bundes 23 ein Radialdichtring 25 angeordnet ist. Dieser radial vorgespannte Radialdichtring 25 liegt dabei sowohl im Nutgrund der Außennut 24 als auch an der Mantelfläche der Dicht- und Führungsfläche 15 dichtend an. Von einer Stirnseite des zweiten Kuppelelements 11, die vom Inneren des Kraftstofftanks 3, 5 abgewandt ist, geht als Bestandteil eines Verriegelungselements 26 eine Sperrhülse 27 aus, durch die in Teilbereichen radial verlaufende Sperrschlitze 27a hindurchgeführt sind. Weiterhin sind Bestandteil des Verriegelungselements 26 die zuvor erläuterte Sperrnut 21 im ersten Kuppelelement 10 sowie ein Verriegelungsbügel 28. Die Sperrhülse 27 ist als Teil des ersten Kuppelelementes 10 ausgeführt.

Alternativ kann vorgesehen sein, das zweite Kuppelelement 11 durch Schweißen oder Verkleben mit dem Tankstutzen 7, 8 unlösbar zu verbinden.

In seinem Inneren ist das zweite Kuppelelement 11 zunächst mit einem im Inneren des Kraftstofftanks 3, 5 benachbarten Leitabschnitt 29 versehen, der einerseits auf den Innendurchmesser des ersten Kuppelelements 10 verengt und andererseits auf den Durchmesser der Bohrung 13 erweitert ist. Zwischen diesen beiden Enden des Leitabschnitts 29 ist ein gekrümmter Übergang vorgesehen. Diese Ausbildung ist strömungstechnisch von Vorteil, jedoch ist es ebenfalls denkbar, bei einer Ausführungsvariante der Kuppelelemente 10, 11 aus Kostengründen auf einen solchen Übergang zu verzichten. Weiterhin weist das zweite Kuppelelement 11 in seinem Inneren einen zylindrischen Führungsabschnitt 30 auf, der gegenüber dem Leitabschnitt 29 mit einem Bord 31 endet.

Schließlich schließt sich an den zylindrischen Führungsabschnitt 30 in Richtung des Wellrohres 4, 6 ein konischer Einführabschnitt 32 an, an dem zur Zentrierung des ersten Kuppelelements 10 gegenüber dem zweiten Kuppelelement 11 der konische Außenabschnitt 19 des ersten Kuppelelements 10 anliegt. Am zylindrischen Führungsabschnitt 30 des zweiten Kuppelelements 11 ist eine radiale Innennut 33 vorgesehen, die einen Radialdichtring 34 aufnimmt. Das zweite Kuppelelement 11 ist an seinem Außenumfang mit einem Vielzahnprofil 35 versehen, an welchem zum Einschrauben des Kuppelelements 11 in das Innengewinde 14 mit einem Werkzeug angegriffen wird. Bei einer Ausbildung des zweiten Kuppelelementes 11 als Spritzgussteil kann an die Stelle des Vielzahnprofiles 35 eine Mehrkantprofil treten, welches im Spritzgussverfahren einfacher herstellbar ist.

Wie aus der Figur 2 hervorgeht, wird das jeweilige Wellrohr 4 oder 6, das mit dem ersten Kuppelelement 10 versehen ist, mit diesem in den konischen Einführabschnitt 32 eingeführt und gelangt von diesem aus in den zylindrischen Führungsabschnitt 30. In einer Endstellung liegt dabei der konische Endabschnitt 19 des ersten Kuppelelements 10 am konischen Einführabschnitt 32 des zweiten Kuppelelements 11 an, wobei der Radialdichtring 34 die beiden Kuppelelemente 10 und 11 zueinander abdichtet. Das zweite Kuppelelement 11 ist derart vorkonfektioniert, dass sich der Verriegelungsbügel 28 bereits in den dafür vorgesehenen Sperrschlitzen 27a befindet, so dass bei einem Einführen des ersten Kuppelelementes 10 der Verriegelungsbügel 28 durch den konische Endabschnitt 19 aufgeweitet wird. Mit dem Erreichen der Endposition des ersten Kuppelelementes 10 gegenüber dem zweiten Kuppelelementes 11 springt der Verriegelungsbügel 28 in die Sperrnut 21 des ersten Kuppelelementes 10 zurück. Das Einschnappen des Verriegelungsbügel 28 in die Sperrnut 21 erfolgt mit einem hörbaren Geräusch, was das Überprüfen der Verbindung der beiden Kuppelelemente 10, 11 durch eine Bedienperson vereinfacht.

Die Wirkung dieser Abdichtung ist unabhängig davon, mit welcher Kraft das erste Kuppelelement 10 in axialer Richtung am zweiten Kuppelelement 11 anliegt. Auf diese Weise kann erfindungsgemäß das jeweilige Wellrohr 4 oder 6 wirkungsvoll an seinem Anschluss an einen Befüllstutzen 1 oder an einem Kraftstofftank 3 oder 5 abgedichtet werden. Die Wellrohre 4 oder 6 müssen nicht fertig konfektioniert sein sondern können jeweils mit der erforderlichen Länge abgeschnitten und sodann mit den ersten Kuppelelementen 10 versehen werden. Auch die Tankstutzen 7 und 8 der Kraftstofftanks 3, 4 sowie die Befüllstutzen 1 weisen bereits im Anlieferzustand die zweiten Kuppelelemente 11 auf.

**Bezugszeichenliste**

| | | | |
|---|---|---|---|
| 1 | Befüllstutzen | 19 | konischer Außenabschnitt |
| 2 | Verschlussdeckel | 20 | zylindrischer Endabschnitt |
| 3 | Kraftstofftank als Haupttank | 21 | Sperrnut |
| 4 | erstes Wellrohr | 22 | Außengewinde von 11 |
| 5 | Kraftstofftank als Zusatztank | 23 | Bund von 11 |
| 6 | zweites Wellrohr | 24 | Außennut von 23 |
| 7 | Tankstutzen von 3 | 25 | Radialdichtring |
| 8 | Tankstutzen von 5 | 26 | Verriegelungselement |
| 9 | Kuppeleinheit | 27 | Sperrhülse |
| 10 | erstes Kuppelelement | 27a | Sperrschlitze |
| 11 | zweites Kuppelelement | 28 | Verriegelungsbügel |
| 12 | Wandung von 3, 5 | 29 | Leitabschnitt |
| 13 | Bohrung von 7, 8 | 30 | zylindrischer Führungsabschnitt |
| 14 | Innengewinde von 7, 8 | 31 | Bord |
| 15 | Dicht- und Führungsfläche | 32 | konischer Einführabschnitt |
| 16 | erster Hülsenabschnitt | 33 | Innennut |
| 17 | profilierte Außenmantelfläche | 34 | Radialdichtring |
| 18 | zweiter Hülsenabschnitt | | |

## Patentansprüche

1. Vorrichtung zum Befüllen zumindest eines in einem Kraftfahrzeug angeordneten Kraftstoffstanks (3, 5) mit einem beabstandet zu dem zumindest einen Kraftstofftank (3, 5) angeordneten Befüllstutzen (1), einem am jeweiligen Kraftstofftank (3, 5) vorgesehenen Tankstutzen (7, 8) sowie einem den jeweiligen Befüllstutzen (1) und den jeweiligen Tankstutzen (7, 8) miteinander verbindenden flexibel ausgebildeten Wellrohr (4, 6), wobei das Wellrohr (4, 6) an zumindest einem seiner Enden über eine Kuppeleinheit (9) mit dem Befüllstutzen (1) und/oder Tankstutzen (7, 8) verbunden ist, wobei die Kuppeleinheit (9) aus einem dem Wellrohr (4, 6) zugeordneten ersten Kuppelelement (10) sowie einem zweiten, dem Befüllstutzen (1) und/oder dem Tankstutzen (7, 8) zugeordneten zweiten Kuppelelement (11) besteht, und dass die ersten und zweiten Kuppelelemente (10 und 11) miteinander über eine Steckverbindung kuppelbar und jeweils über zumindest ein formschlüssiges Verriegelungselement (26) in dieser Stellung zueinander arretierbar sind, **dadurch gekennzeichnet, dass** das zweite Kuppelelement (11) über ein Außengewinde (22) in einem Innengewinde (14) des Tank- oder Befüllstutzens (7, 8, 1) fixierbar ist, wobei sich an das Innengewinde (14) an seinem vom Inneren des Kraftstofftanks (3, 5) oder Befüllstutzens (1) abgewandten Seite eine im Tank- oder Befüllstutzen (7, 8, 1) ausgebildete zylindrische Dicht- und Führungsfläche (15) anschließt.

2. Vorrichtung nach Patentanspruch 1, **dadurch gekennzeichnet, dass** das erste Kuppelelement (10) einen ersten Hülsenabschnitt (16) aufweist, der zur Fixierung innerhalb des Wellrohres (4, 6) mit einer konisch ausgebildeten, profilierten Außenmantelfläche (17) versehen ist.

3. Vorrichtung nach einem der Patentansprüche 1 oder 2, **dadurch gekennzeichnet, dass** das zweite Kuppelelement (11) einen sich an das Außengewinde (22) anschließenden, radial über das Außengewinde (22) vorstehenden Bund (23) aufweist.

4. Vorrichtung nach Patentanspruch 3, **dadurch gekennzeichnet, dass** der Bund (23) eine Außennut (24) aufweist, in der ein Radialdichtring (25) angeordnet ist, welcher an einer Innenmantelfläche der Dicht- und Führungsfläche (15) anliegt.

5. Vorrichtung nach einem der Patentansprüche 1 bis 4, **dadurch gekennzeichnet, dass** eine innere Mantelfläche des zweiten Kuppelelements (11), in Richtung des Inneren des Kraftstofftanks (3, 5) oder des Befüllstutzens (1) gesehen, mit einem konischen Einführabschnitt (32), einem zylindrischen Führungsabschnitt (30) und einem sich erweiternden Leitabschnitt (29) versehen ist.

6. Vorrichtung nach Patentanspruch 5, **dadurch gekennzeichnet, dass** der Führungsabschnitt (30) eine radiale Innennut (33) aufweist, in der ein Radialdichtring (34) angeordnet ist.

7. Vorrichtung nach Patentanspruch 1, **dadurch gekennzeichnet, dass** als Verriegelungselement (26) an dem zweiten Kuppelelement (11) an seiner vom Inneren des Kraftstofftanks (3, 5) oder des Befüllstutzens (1) abgewandten Stirnseite eine Sperrhülse (27) vorgesehen ist, die mit Sperrschlitzen versehen ist, wobei Schenkel eines Verriegelungsbügels (28) tangential in das Innere der Sperrhülse (27) ragen und in eine an einer Außenmantelfläche des ersten Kuppelelements (10) vorgesehenen Sperrnut (21) eingreifen.

8. Vorrichtung nach Patentanspruch 5, **dadurch gekennzeichnet, dass** zwischen dem ersten und dem zweiten Kuppelelement (10 und 11) ein axialer Anschlag vorgesehen ist, der zu deren Zentrierung dient und zum einen durch den konischen Einführabschnitt (32) und zum anderen durch einen am ersten Kuppelelement (10) ausgebildeten ebenfalls konischen Außenabschnitt (19) gebildet wird.

9. Vorrichtung nach Patentanspruch 8, **dadurch gekennzeichnet, dass** der Verriegelungsbügel (28) durch den konischen Außenabschnitt (19) des ersten Kuppelelementes (10) bei dessen Einführung in das zweite Kuppelelement (11) vorübergehend aufweitbar ist.

10. Vorrichtung nach Patentanspruch 1, **dadurch gekennzeichnet, dass** vom Befüllstutzen (1) zumindest zwei Wellrohre (4 und 6) ausgehen, von denen eines an einen Tankstutzen (7) zumindest eines als Haupttank dienenden Kraftstofftanks (3) und eines an einen Tankstutzen (8) zumindest eines als Zusatztank dienenden Kraftstofftanks (5) angeschlossen sind.

## Claims

1. A device for filling at least one fuel tank (3, 5) arranged in a motor vehicle comprising a filling connection portion (1) arranged spaced in relation to the at least one fuel tank (3, 5), a tank connection portion (7, 8) provided on the respective fuel tank (3, 5), and a flexible corrugated pipe (4, 6) connecting the respective filling connection portion (1) and the respective tank connection portion (7, 8) together, wherein the corrugated pipe (4, 6) is connected at at least one of its ends by way of a coupling unit (9) to the filling connection portion (1) and/or the tank connection portion (7, 8), wherein the coupling unit (9) comprises a first coupling element (10) associated with the corrugated pipe (4, 6) and a second coupling element (11) associated with the filling connection portion (1) and/or the tank connection portion (7, 8), and the first and second coupling elements (10 and 11) can be coupled together by way of a plug connection and can be arrested in that position relative to each other by way of at least one respective positively locking element (26), **characterised in that** the second coupling element (11) can be fixed by way of a male thread (22) in a female thread (14) of the tank or filling connection portion (7, 8, 1), wherein adjoining the female thread (14) at its side remote from the interior of the fuel tank (3, 5) or the filling connection portion (1) is a cylindrical sealing and guide surface (15) provided in the tank or filling connection portion (7, 8, 1).

2. A device according to claim 1 **characterised in that** the first coupling element (10) has a first sleeve portion (16) which is provided with a conical profiled outside peripheral surface (17) for fixing within the corrugated pipe (4, 6).

3. A device according to one of claims 1 and 2 **characterised in that** the second coupling element (11) has a collar (23) which adjoins the male thread (22) and which projects radially beyond the male thread (22).

4. A device according to claim 3 **characterised in that** the collar (23) has an outside groove (24) in which there is arranged a radial sealing ring (25) which bears against an inside peripheral surface of the sealing and guide surface (15).

5. A device according to one of claims 1 to 4 **characterised in that** an inner peripheral surface of the second coupling element (11), viewed in the direction of the interior of the fuel tank (3, 5) or the filling connection portion (1) is provided with a conical insertion portion (32), a cylindrical guide portion (30) and an enlarging guidance portion (29).

6. A device according to claim 5 **characterised in that** the guide portion (30) has a radial inside groove (33) in which a radial sealing ring (34) is arranged.

7. A device according to claim 1 **characterised in that** provided as the locking element (26) on the second coupling element (11) at its end remote from the interior of the fuel tank (3, 5) or the filling connection portion (1) is a locking sleeve (27) provided with locking slots, wherein limbs of a locking clip (28) project tangentially into the interior of the locking sleeve (27) and engage into a locking groove (21) provided at an outside peripheral surface of the first coupling element (10).

8. A device according to claim 5 **characterised in that** provided between the first and second coupling elements (10 and 11) is an axial abutment which serves for centring thereof and which is formed on the one hand by the conical insertion portion (32) and on the other hand by an also conical outside portion (19) provided on the first coupling element (10).

9. A device according to claim 8 **characterised in that** the locking clip (28) can be temporarily enlarged by the conical outside portion (19) of the first coupling element (10) upon the insertion thereof into the second coupling element (11).

10. A device according to claim 1 **characterised in that** extending from the filling connection portion (1) are at least two corrugated pipes (4 and 6) of which one is connected to a tank connection portion (7) of at least one fuel tank (3) serving as a main tank and one is connected to a tank connection portion (8) of at least one fuel tank (5) serving as an ancillary tank.

## Revendications

1. Dispositif de remplissage d'au moins un réservoir de carburant (3, 5) disposé dans un véhicule automobile, comprenant une tubulure de remplissage (1) disposée à distance dudit au moins un réservoir de carburant (3, 5), une tubulure de réservoir (7, 8) prévue sur le réservoir de carburant (3, 5) respectif ainsi qu'un tube ondulé (4, 6) réalisé flexible, reliant entre elles la tubulure de remplissage (1) respective et la tubulure de réservoir (7, 8) respective, le tube ondulé (4, 6) étant relié à au moins une de ses extrémités, par l'intermédiaire d'une unité d'accouplement (9), à la tubulure de remplissage (1) et/ou à la tubulure de réservoir (7, 8), l'unité d'accouplement (9) étant composée d'un premier élément d'accouplement (10) associé au tube ondulé (4, 6) et d'un deuxième élément d'accouplement (11) associé à la tubulure de remplissage (1) et/ou à la tubulure de réservoir (7, 8), et les premier et deuxième éléments d'accouplement (10 et 11) pouvant être accouplés entre eux au moyen d'une connexion enfichable et pouvant être bloqués mutuellement dans cette position chaque fois par au moins un élément de verrouillage (26) à blocage par complémentarité de formes, **caractérisé en ce que** le deuxième élément d' accouplement (11) peut être fixé par un filetage extérieur (22) dans un filetage intérieur (14) de la tubulure de réservoir ou de remplissage (7, 8, 1), une surface d'étanchéité et de guidage (15) cylindrique formée dans la tubulure de réservoir ou de remplissage (7, 8, 1) faisant suite au filetage intérieur (14) sur son côté opposé à l'intérieur du réservoir de carburant (3, 5) ou de la tubulure de remplissage (1).

2. Dispositif selon la revendication 1, **caractérisé en ce que** le premier élément d'accouplement (10) présente une première partie douille (16) qui est pourvue d'une surface périphérique extérieure (17) profilée, de forme conique, pour la fixation à l'intérieur du tube ondulé (4, 6).

3. Dispositif selon l'une des revendications 1 ou 2, **caractérisé en ce que** le deuxième élément d'accouplement (11) présente une collerette (23) faisant suite au filetage extérieur (22), en saillie radiale par rapport au filetage extérieur (22).

4. Dispositif selon la revendication 3, **caractérisé en ce que** la collerette (23) présente une rainure extérieure (24) dans laquelle est disposé un joint radial (25) qui porte sur une surface périphérique intérieure de la surface d'étanchéité et de guidage (15).

5. Dispositif selon l'une des revendications 1 à 4, **caractérisé en ce qu'**une surface périphérique intérieure du deuxième élément d'accouplement (11), vue en direction de l'intérieur du réservoir de carburant (3, 5) ou de la tubulure de remplissage (1), est pourvue d'une partie d'introduction conique (32), d'une partie de guidage cylindrique (30) et d'une partie directrice (29) allant en s'élargissant.

6. Dispositif selon la revendication 5, **caractérisé en ce que** la partie de guidage (30) présente une rainure intérieure radiale (33) dans laquelle est disposé un joint radial (34).

7. Dispositif selon la revendication 1, **caractérisé en ce qu'**une douille de blocage (27) est prévue comme élément de verrouillage (26) sur le deuxième élément d'accouplement (11), sur sa face frontale opposée à l'intérieur du réservoir de carburant (3, 5) ou de la tubulure de remplissage (1), laquelle est pourvue de fentes de blocage, des branches d'un étrier de verrouillage (28) faisant saillie tangentiellement à l'intérieur de la douille de blocage (27) et s'engageant dans une rainure de blocage (21) prévue sur une surface périphérique extérieure du premier élément d'accouplement (10).

8. Dispositif selon la revendication 5, **caractérisé en ce qu'**une butée axiale est prévue entre le premier et le deuxième élément d'accouplement (10 et 11), laquelle sert à leur centrage et est formée, d'une part, par la partie d'introduction conique (32) et, d'autre part, par une partie extérieure également conique (19) formée sur le premier élément d'accouplement (10).

9. Dispositif selon la revendication 8, **caractérisé en ce que** l'étrier de verrouillage (28) peut être élargi temporairement par la partie extérieure conique (19) du premier élément d'accouplement (10) lors de son introduction dans le deuxième élément d'accouplement (11).

10. Dispositif selon la revendication 1, **caractérisé en ce que** de la tubulure de remplissage (1) partent au moins deux tubes ondulés (4 et 6) dont un est raccordé à une tubulure de réservoir (7) d' au moins un réservoir de carburant (3) servant de réservoir principal et un à une tubulure de réservoir (8) d'au moins un réservoir de carburant (5) servant de réservoir auxiliaire.
